# EUROPÄISCHE PATENTSCHRIFT

(11) **EP 3 186 521 B1**
(45) Veröffentlichungstag und Bekanntmachung des Hinweises auf die Patenterteilung: **09.01.2019**
(21) Anmeldenummer: 15790446.7
(22) Anmeldetag: 24.08.2015
(51) Int. Cl.: F16C 19/50, F16C 33/46, F16D 65/18, F16D 125/28

(54) **LAGERUNG EINES MIT EINEM SCHWENKARM VERSEHENEN HEBELS GEGENÜBER EINEM DRUCKSTÜCK**
SUPPORT OF A LEVER HAVING A SWIVEL ARM RELATIVE TO A PRESSURE ELEMENT
SUPPORT D'UN LEVIER AVEC UN BRAS PIVOTANT RELATIF AU PATIN DE SERRAGE

(30) Priorität: 26.08.2014 DE 102014112241
(43) Veröffentlichungstag der Anmeldung: 05.07.2017
(73) Patentinhaber: BPW Bergische Achsen KG, 51674 Wiehl (DE)
(72) Erfinder: KLAAS, Thomas, 51580 Reichshof (DE)
(74) Vertreter: Bungartz Christophersen Partnerschaft mbB Patentanwälte
(86) Internationale Anmeldenummer: PCT/DE2015/100350
(87) Internationale Veröffentlichungsnummer: WO 2016/029903

(56) Entgegenhaltungen:
- EP-A1- 0 589 206
- DE-A1- 4 215 200
- DE-A1-102007 024 787
- DE-A1-102010 006 262

## Beschreibung

Die Erfindung betrifft eine Lagerung eines mit einem Schwenkarm versehenen Hebels gegenüber einem Druckstück nach dem Oberbegriff des Patentanspruchs 1.

Eine Lagerung mit diesen Merkmalen ist aus der DE 10 2005 034 739 A1, der DE 10 2007 024 787 A1 oder der DE 10 2010 006 262 A1 bekannt. Sie besteht aus einer inneren und einer äußeren Lagerschale, deren kreisbogenförmig gekrümmte Wälzbahnen einander radial unter Zwischenlage von Wälzkörpern gegenüber liegen. Der zwischen den Wälzbahnen angeordnete Wälzkörperraum, in dem sich der Lagerkäfig mit den darin zusammengefassten Wälzkörpern bewegen kann, wird in jede der beiden Umfangsrichtungen durch einen Anschlag begrenzt. Der eine der Anschläge ist als ein Vorsprung an der äußeren, und der andere Anschlag als ein Vorsprung an der inneren Lagerschale ausgebildet. Beide Anschläge bzw. Vorsprünge ragen in den Wälzkörperraum hinein, was sich im Rahmen der Montage der Lagerung zwischen einem mit einem Schwenkarm versehenen Hebel und einem Druckstück als nachteilig herausgestellt hat.

Der Erfindung liegt die Aufgabe zugrunde, die gattungsgemäße Lagerung eines mit einem Schwenkarm versehenen Hebels gegenüber einem Druckstück in montagetechnischer Hinsicht weiterzuentwickeln.

Zur Lösung dieser Aufgabe wird eine Lagerung mit den Merkmalen des Patentanspruchs 1 vorgeschlagen. Bei dieser Lagerung wird nur die Beweglichkeit des Lagerkäfigs in die eine Umfangsrichtung durch einen in den Wälzkörperraum hineinragenden Vorsprung begrenzt. Hingegen wird die Beweglichkeit des Lagerkäfigs in die andere, zweite Umfangsrichtung begrenzt, ohne dass sich ein Vorsprung in den Wälzkörperraum erstreckt.

Stattdessen wird eine in der anderen Wälzbahn angeordnete oder in diese teilweise hinein reichende Tasche oder Öffnung vorgeschlagen, die sich nur über einen Teil der Wälzbahnbreite erstreckt und die im Übergang zu jener Krümmungsebene, in der die andere Wälzbahn verläuft, eine Anschlagkante bildet. Diese gleichsam versenkt angeordnete Anschlagkante dient als zweiter Anschlag für den Lagerkäfig, was im Rahmen der Montage der Lagerung zwischen einem mit einem Schwenkarm versehenen Hebel und einem Druckstück eine besonders vorteilhafte Lösung ist.

Mit einer Ausgestaltung der Lagerung wird vorgeschlagen, dass die andere Wälzbahn auf einem dem Schwenkarm abgewandt angeordneten Umfangsabschnitt mit der Tasche bzw. der Öffnung versehen ist.

Die Tasche bzw. Öffnung ist vorzugsweise auf der Mitte der Wälzbahnbreite angeordnet, außerdem sollte die Breite der Tasche bzw. Öffnung nicht mehr als ein Drittel der Wälzbahnbreite betragen.

Mit einer Ausgestaltung wird vorgeschlagen, dass der Lagerkäfig, der Anschlagkante in Umfangsrichtung gegenüberliegend, mit einem in die Tasche bzw. Öffnung ragenden Vorsprung versehen ist. Der Vorsprung ist an dem Lagerkäfig vorzugsweise einstückig angeformt, insbesondere wenn der Lagerkäfig aus Kunststoff besteht.

Vorzugsweise ist, in Umfangsrichtung betrachtet, die Länge des Vorsprungs geringer, als die Länge der Tasche bzw. Öffnung. Die Breite des Vorsprungs ist vorzugsweise geringer, als die Breite der Tasche bzw. Öffnung.

Weiter wird vorgeschlagen, dass die druckstückseitige Wälzbahn an einer Lagerschale ausgebildet ist, an der der radiale Vorsprung ausgebildet ist.

Zur Befestigung an dem Druckstück kann die Lagerschale mit einem nach außen ragenden Verankerungsstift versehen sein, der in dem Druckstück verdübelt ist.

Zur Erzielung geringer Fertigungskosten bei der Herstellung des Hebels ist es von Vorteil, wenn sich die Tasche bzw. Öffnung in der hebelseitigen Wälzbahn befindet. Herstellungstechnisch ist es ebenfalls von Vorteil, wenn der Hebel einschließlich des Schwenkarms ein geschmiedetes Bauteil ist, und auch die Tasche Ergebnis des Schmiedeprozesses ist. Die Zahl der bei der Herstellung des Hebels erforderlichen Bearbeitungsschritte lässt sich auf diese Weise reduzieren, und damit Fertigungskosten sparen.

Die Erfindung wird im Folgenden anhand der Zeichnungen beschrieben. Darin zeigen
- Fig. 1: in einer Explosionsdarstellung eine der Bremskraftübertragung und -verstärkung in einer druckluftbetriebenen Scheibenbremse dienende Anordnung aus einem schwenkbaren Hebel, zwei Wälzlagern, von denen hier nur eines dargestellt ist, und einem Druckstück;
- Fign. 2 a-c: einen Schnitt durch die betriebsfertig montierte Anordnung, wobei von links nach rechts die Zustände bei jeweils fortschreitender Zuspannung wiedergegeben sind;
- Fig. 3: den Schnitt nach Fig. 2b in vergrößertem Maßstab;
- Fig. 4: in perspektivischer Ansicht das Schwenklager der Lagerung, wobei die Lagerbestandteile des Schwenklagers eine Baugruppe bilden;
- Fig. 5: in perspektivischer Ansicht das Schwenklager der Lagerung in einer zweiten Ausführungsform, wobei wiederum die Lagerbestandteile des Schwenklagers eine Baugruppe bilden;
- Fig. 6a-c: weitere perspektivische Ansichten des Schwenklagers gemäß der zweiten Ausführungsform, wobei die Zustände bei jeweils fortschreitender Zuspannung wiedergegeben sind;
- Fig. 7: den schwenkbaren Hebel in einer Ausführungsform, bei der zusätzlich Lagerschalen an den Hebel angesetzt sind, und
- Fig. 8: in Einzeldarstellung eine der an den Hebel nach Fig. 7 angesetzten Lagerschalen.

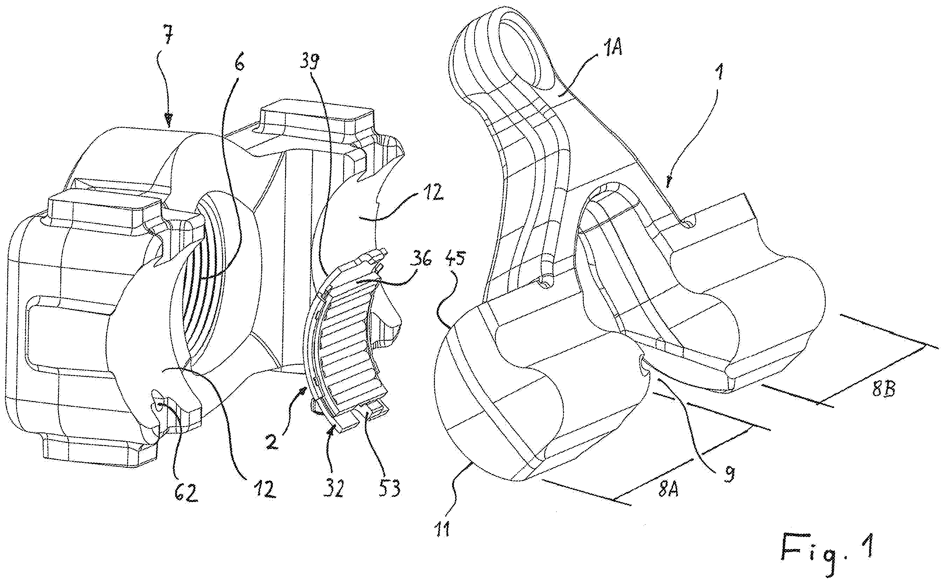

Die Figur 1 zeigt, als Bestandteil einer druckluftbetriebenen Nutzfahrzeug-Scheibenbremse, eine der Bremskraftübertragung und -verstärkung dienende Anordnung aus einem schwenkbaren Hebel 1, zwei Wälzlagern, von denen in Fig. 1 nur ein Wälzlager 2 dargestellt ist, und einem Druckstück 7. In einem Bremssattel der Scheibenbremse ist ein Druckstempel geführt. Bei Betätigung der Bremse legt sich der Druckstempel nach Überwindung eines Lüftspiels gegen die Rückseite eines inneren Bremsbelags und drückt diesen gegen die rotierende Bremsscheibe der Scheibenbremse. Zugleich wird rückwärtig über den Bremssattel die Reaktionskraft auf den anderen, von außen gegen die Bremsscheibe arbeitenden Bremsbelag übertragen.

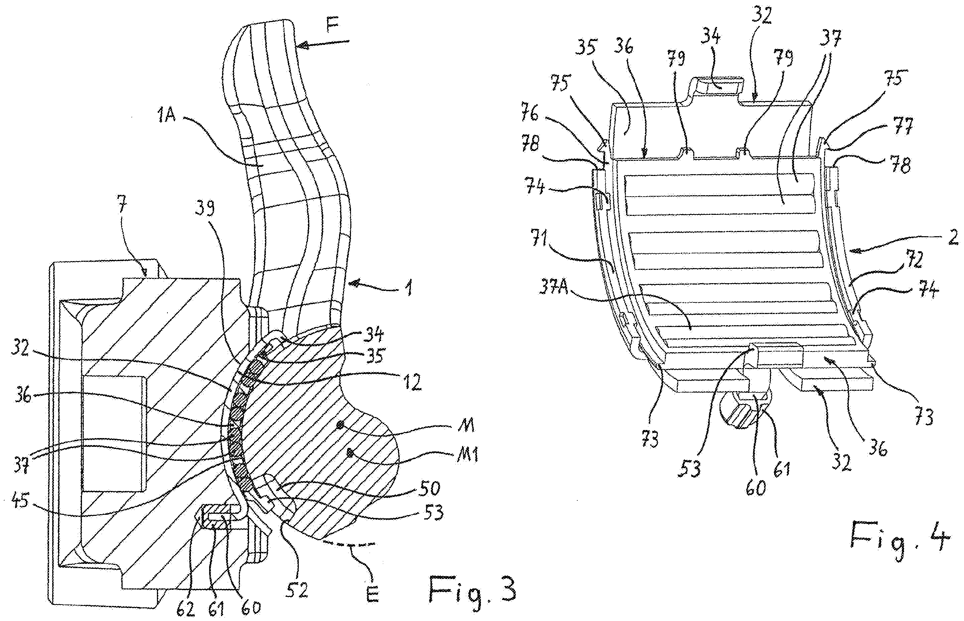

Zum Ausgleich des sich im Laufe der Zeit einstellenden Bremsverschleißes ist die Scheibenbremse mit einer Nachstelleinrichtung versehen. Diese befindet sich in einem mit einem Außengewinde versehenen Nachstellelement. Das Außengewinde des Nachstellelements greift in ein Innengewinde 6. Das Innengewinde 6 befindet sich in einem nach Art einer Quertraverse gestalteten Druckstück 7, welches in dem Bremssattel in Zuspannrichtung geführt ist.
Die Reibkraft zwischen der Bremsscheibe und den Bremsbelägen und damit die Verzögerung des Fahrzeugs ist abhängig von der Zuspannkraft, die von einem an dem Bremssattel befestigten Bremszylinder, vorzugsweise einem druckluftbetätigtem Bremszylinder, erzeugt wird. Der hier nur anhand seiner Betätigungskraft F (Fig. 3) symbolisierte Bremszylinder arbeitet gegen das freie Ende eines Schwenkarms 1A, mit dem der Hebel 1 versehen ist.

Im Übrigen ist der Hebel 1, der auch als Zuspannhebel bezeichnet werden kann, gabelförmig gestaltet, indem zwar nur ein Schwenkarm 1A vorhanden ist, aber die Zuspannwelle des Hebels aus zwei axial zueinander beabstandeten Abschnitten 8A, 8B besteht. Zwischen diesen zwei Abschnitten 8A, 8B befindet sich, auf derselben Mittellinie wie der Schwenkarm 1A angeordnet, ein Freiraum 9. Der Freiraum 9 befindet sich in Verlängerung zu dem in dem Druckstück 7 ausgebildeten Innengewinde 6, in welches das Nachstellelement der Nachstellung eingreift.
Mit der Rückseite der aus zwei Abschnitten bestehenden Zuspannwelle ist der Hebel 1 mittels eines nicht dargestellten Schwenklagers gegen den Bremssattel abgestützt. Bei Betätigung des Bremszylinders schwenkt der Hebel 1 um dieses Schwenklager in Richtung zu der Bremsscheibe. Diese Schwenkbewegung führt, indem gemäß Fig. 3 die Drehachse M der Lagerung des Hebels 1 am Druckstück 7 exzentrisch zu der Drehachse M1 jenes Schwenklagers angeordnet ist, über das der Hebel 1 gegen den Bremssattel abgestützt ist, zu einem Vortreiben des Druckstücks 7 in Richtung zur Bremsscheibe.
Die Lagerung des Hebels 1 am Druckstück 7 ist aufgeteilt auf die beiden Abschnitte 8A, 8B der Zuspannwelle. Auf jeder Seite des mittig in dem Hebel 1 ausgebildeten Freiraums 9 ist also jeweils ein als Wälzlager ausgebildetes Schwenklager 2 für die Schwenklagerung des Hebels 1 gegenüber dem Druckstück 7 angeordnet. Zu diesem Zweck ist der Hebel 1 auf jedem der beiden Abschnitte 8A, 8B, dem Druckstück 7 zugewandt, mit jeweils einer konvex gekrümmten Druckfläche 11 versehen. Jede Druckfläche 11 ist teilzylindrisch bzw. teilkreisförmig mit Bezug auf die Drehachse M.

Entsprechend weist das gegenüberliegende Druckstück 7 zwei konkav gekrümmte Druckflächen 12 in Schalenform auf. Auch die Druckflächen 12 sind teilzylindrisch bzw. teilkreisförmig mit Bezug auf die Drehachse M.

Zwischen den so paarweise vorhandenen Druckflächen 11, 12 am Hebel 1 und am Druckstück 7 befindet sich jeweils eine schalenförmige Wälzlagerung. Deren Drehachse M ist gegenüber der Drehachse M1 des Schwenklagers versetzt, über das der Hebel 1 zur Aufnahme der Reaktionskräfte rückseitig gegen den Bremssattel abgestützt ist. Durch die Exzentrizität zwischen den beiden Schwenk- bzw. Drehachsen M, M1 kommt es beim Verschwenken des Hebels 1 zu einer Vorverlagerung der Druckflächen 11 des Hebels 1 in Richtung zum Druckstück 7, und damit zu dem gewünschten Vorschub und der Zuspannung des Druckstücks 7 in Richtung zur Bremsscheibe.

Zu jedem der beiden Schwenklager, die identisch gestaltet sind, gehören jeweils eine druckstückseitige Wälzbahn 35, eine hebelseitige Wälzbahn 45, und dazwischen ein teilkreisförmig gekrümmter Lagerraum, in dem ein einzelner Lagerkäfig 36 mit darin drehgelagerten Wälzkörpern 37 Platz findet. Die Wälzkörper 37 sind längliche Zylinderrollen, die zugleich an der druckstückseitigen Wälzbahn 35 und der hebelseitigen Wälzbahn 45 abrollen, und sich über den größten Teil der Breite des Lagerkäfigs 36 erstrecken. Der Lagerkäfig 36 besteht vorzugsweise aus Kunststoff.

Die druckstückseitige Wälzbahn 35 ist an der konkav gestalteten Innenseite einer gebogenen Lagerschale 32 ausgebildet. Mit ihrer konvex gestalteten Außenseite 39 ist die gebogene Lagerschale 32 gegen die Druckfläche 12 an dem Druckstück 7 abgestützt. Die Lagerschale 32 besteht vorzugsweise aus Metallblech.

An dem dem Schwenkarm 1A zugewandten Ende der äußeren Lagerschale 32 ist an dieser ein radialer Vorsprung 34 angeformt. Dieser Vorsprung 34 bildet einen die Beweglichkeit des Lagerkäfigs 36 in die eine Umfangsrichtung begrenzenden Anschlag. Der Lagerkäfig 36 mit den Wälzkörpern 37 kann sich daher nur soweit in die eine Umfangsrichtung bewegen, bis er gegen diesen Anschlag 34 stößt. Es besteht daher keine Gefahr, dass sich der Lagerkäfig 36 soweit in diese Umfangsrichtung, nämlich zu dem Schwenkarm 1A hin, bewegt, dass er und die äußere Lagerschale 32 auseinanderfallen.

Auch in die andere Umfangsrichtung, nämlich in die von dem Schwenkarm 1A abgewandte Richtung, ist die Beweglichkeit des Lagerkäfigs 36 durch einen Anschlag begrenzt. Hierzu befindet sich in der hebelseitigen Wälzbahn 45, welche konvex geformt ist und welche durch eine Schleifbearbeitung der Abschnitte 8A, 8B des Hebels 1 hergestellt wird, eine Öffnung in der Gestalt einer Tasche 50. Bei der Tasche 50 handelt es sich um eine Materialausnehmung in der Druckfläche 11, welche die hebelseitige Wälzbahn 45 bildet.

Die Öffnung in Gestalt der Tasche 50 befindet sich in der Wälzbahn 45, erstreckt sich aber nur über einen Teil der Gesamtlänge der gekrümmt verlaufenden Wälzbahn 45. Sie erstreckt sich auch nur über einen Teil der Breite der Wälzbahn 45, so dass zu beiden Seiten der Tasche 50 Wälzbahnbereiche zum Abrollen von Wälzkörpern 37 übrig bleiben.

Die Tasche 50 bildet dort, wo ihre Wandung an die teilzylindrische Krümmungsebene E der Wälzbahn 45 stößt, eine Anschlagkante 52. Die Anschlagkante 52 bildet einen Anschlag, indem sie die Beweglichkeit des Lagerkäfigs 36 in von dem Schwenkarm 1A abgewandter Umfangsrichtung begrenzt.

Der Gegenanschlag zu der Anschlagkante 52 befindet sich an dem Lagerkäfig 36. Zu diesem Zweck ist an dem einen Ende des Lagerkäfigs 36, der Anschlagkante 52 in Umfangsrichtung gegenüberliegend, ein Vorsprung 53 ausgebildet. Der Vorsprung 53 erstreckt sich nach radial innen bis über die teilzylindrische Ebene E hinaus, in der sich die Wälzbahn 45 befindet, so dass der Vorsprung 53 bis in die Tasche 50 hinein reicht.

Sofern der Lagerkäfig 36 aus Kunststoff besteht, ist der Vorsprung 53 einstückig an dem Ende des Lagerkäfigs angeformt.

Fig. 3 lässt erkennen, dass die Länge des Vorsprungs 53 in Umfangsrichtung geringer ist, als die Länge der Tasche 50 in Umfangsrichtung. Die Breite des Vorsprungs 53 ist etwas geringer, als die Breite der Tasche 50.

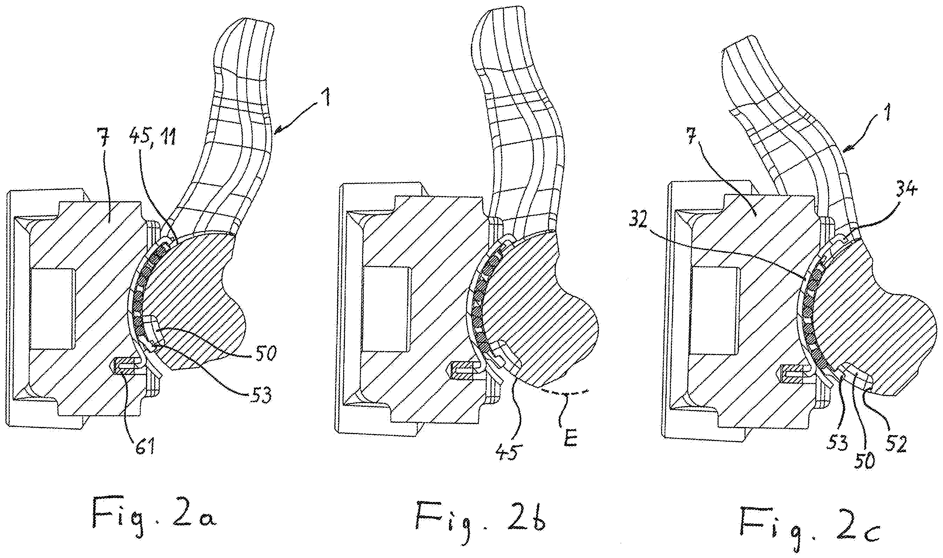

Die Wirkung der beiden die Beweglichkeit des Lagerkäfigs 36 begrenzenden Anschläge zeigen die Figuren 2a - 2c, denn diese zeigen den Schwenkhebel 1 in jeweils verschiedenen Stellungen. In Fig. 2a befindet sich der Schwenkhebel 1 in seiner Ausgangslage bei unbetätigter Bremse. Die Fig. 2b zeigt den Hebel in einer Position die dieser einnimmt, wenn die Bremsbeläge nach Überwindung des Lüftspiels in Kontakt zu der Bremsscheibe kommen. Die Fig. 2c zeigt den Hebel bei maximaler Zuspannung und voller Bremskraft.

In der Normalposition des Hebels nach Fig. 2a erfolgt die Grundpositionierung des Lagerkäfigs 36. Dieser ist zwischen den beiden Anschlägen, also einerseits dem Vorsprung 34 an der Lagerschale 32, und andererseits der Anschlagkante 52 an dem Hebel 1, so positioniert, dass dem Lagerkäfig 36 keine nennenswerte Bewegung möglich ist. Je weiter der Hebel 1 im Rahmen der Bremsbetätigung verschwenkt, desto mehr wandert der Käfig durch das Abrollen der Wälzkörper 37, und desto mehr vergrößern sich die Abstände zu den beiden Anschlägen. Daher sollte in Umfangsrichtung die Länge des Vorsprungs 53 geringer sein, als die Länge der Tasche 50, in die der Vorsprung 53 eintaucht und in der er sich bewegen kann. Bei der Situation nach Fig. 2c kommt es, anders als dargestellt, möglichst zu keinem Kontakt zwischen dem Vorsprung 53 und der Wandung der Tasche 50.

Die Tasche 50 befindet sich auf jenem Umfangsabschnitt der Wälzbahn 45, der am weitesten von dem Schwenkarm 1A entfernt liegt, vorzugsweise auf dem letzten Viertel der teilzylindrischen Wälzbahn 45. Denn in der in Fig. 2c wiedergegebenen Situation maximaler Zuspannkraft sind die in dem Lagerkäfig 36 zusammengefassten Wälzkörper 37 soweit längs der hebelseitigen Wälzbahn 45 gewandert, dass sich kein Wälzkörper 37 mehr auf jenem Umfangsabschnitt der Wälzbahn 45 befindet, auf dem sich die Tasche 50 befindet. Bei maximalen Kräften steht daher für alle Wälzkörper 37 die volle Breite der Wälzbahn 45 zur Abstützung zur Verfügung. Zu Beginn der Zuspannung hingegen, wie in Fig. 2a dargestellt, rollen einige Wälzkörper 37 noch auf jenem Umfangsabschnitt der Wälzbahn 45 ab, auf dem sich die Tasche 50 befindet. Da sich die Tasche in der Mitte der Wälzbahnbreite befindet, stützen sich diese Wälzkörper 37 dann nur in den Bereichen zu beiden Seiten der Tasche 50 ab, und nicht in der Mitte. Wegen der in dieser Situation noch geringen Wälzlagerkräfte ist dies nicht von Nachteil.

Da die Bestimmung der Tasche 50 die Bereitstellung der weiteren Anschlagkante 52 für den Lagerkäfig 36 ist, reicht eine geringe Breite der Tasche 50 aus. Je geringer diese Breite ist, desto mehr Breite steht als Aufstands- und Abrollfläche für die Wälzkörper 37 zur Verfügung, die sich allesamt über die volle Breite der Wälzbahn 45 erstrecken. Vorzugsweise beträgt die Breite der Tasche 50 nicht mehr als ein Drittel der Aufstandsbreite der Wälzkörper 37 auf der Wälzbahn 45.

Bei der hier beschriebenen Ausführungsform ist die Tasche 50 innerhalb der Fläche der Wälzbahn 45 angeordnet, d. h. Tasche 50 ist allseitig von der Wälzbahn 45 umgeben. Je nach Hebelgeometrie lässt sich jedoch auch bereits mit einer Tasche 50, die in Umfangsrichtung nur teilweise in die Fläche der Wälzbahn 45 hinein reicht, jener zweite Anschlag 52 realisieren, welcher die Beweglichkeit des Lagerkäfigs 36 in die zweite Umfangsrichtung begrenzt. Auch in diesem Fall befindet sich die Anschlagkante 52 dort, wo die Wandung der Tasche 50 auf jene Krümmungsebene E stößt, in der sich die Wälzbahn 45 befindet.

Ist der Hebel 1 einschließlich seines Schwenkarms 1A ein durch Schmieden gefertigtes Bauteil, so ist auch die Tasche 50 Ergebnis des Schmiedeprozesses. Es ist nicht erforderlich, die Tasche 50 und insbesondere die daran im Übergang zu der Krümmungsebene E der Wälzbahn 45 ausgebildete Anschlagkante 52 eigenen Bearbeitungsschritten zu unterziehen, sofern die Wälzbahn 45 hochgenau bearbeitet ist, etwa durch eine Schleifbearbeitung des Schmiedeteils im Bereich der Wälzbahnen 45.

Für die Befestigung der jeweiligen Lagerschale 32 an dem Druckstück 7 ist jede Lagerschale 32 über einen nach außen ragenden Verankerungszapfen 60 in dem Druckstück 7 verdübelt. Der Verankerungszapfen 60 ist von rechteckigem Querschnitt mit zwei längeren und zwei kürzeren Seiten, und sitzt in einer im Wesentlichen ebenfalls rechteckigen Öffnung eines Dübels 61, der seinerseits in einer Bohrung 62 (Fig. 1) in dem Druckstück 7 sitzt.

Die Fig. 4 zeigt, passend für jedes der beiden Wälzlager 2, das fertigmontierte Schalenlager vor der abschließenden Befestigung an der muldenförmigen Fläche 12 des Druckstücks 7. Beide Schalenlager sind identisch gestaltet, es kann daher nicht zu einem versehentlichen Vertauschen kommen.

Die gegen das Druckstück 7 abgestützte Lagerschale 32 ist an beiden Längsrändern mit radial nach innen gerichteten Seitenwänden 71, 72 versehen. Zwischen den Seitenwänden 71, 72 befindet sich der Lagerkäfig 36, der daher durch die Seitenwände 71, 72 seitlich geführt ist. An beiden Seitenwänden 71, 72 sind Vorsprünge 74 von solcher Breite ausgebildet, dass sich die Vorsprünge 74 bis über Längsränder 73 des Lagerkäfigs 36 erstrecken, wodurch die Vorsprünge 74 den Lagerkäfig 36 in radialer Richtung in der Lagerschale 32 verriegeln. Der Lagerkäfig 36 kann sich daher nicht radial aus der Lagerschale 32 lösen. Bei den Vorsprüngen 74 handelt es sich z. B. um örtliche Materialverformungen der Ränder der Seitenwände 71, 72.

Für die Kompaktheit des in Fig. 4 dargestellten Schwenklagers ist es von Vorteil, dass der Lagerkäfig 36 an seinen beiden Längsrändern 73 flacher ist, als in seinem die Wälzkörper 37 zusammenfassenden Mittelbereich. Diese Ausgestaltung ermöglicht an der Lagerschale 32 kurze Seitenwände 71, 72, also Seitenwände 71, 72 von geringer radialer Erstreckung.

Die Seitenwände 71, 72 sind insbesondere so kurz, dass sie sich radial weniger weit erstrecken, als die zylindrischen Mantelflächen 37A (Fig. 4) der Wälzkörper 37. Auf diese Weise reichen die Seitenwände 71, 72 bei fertig montierter Lagerung nicht bis an die Krümmungsebene E der hebelseitigen Wälzbahn 45 heran. Die maximale Breite der Wälzbahn 45 unterliegt daher keinen Beschränkungen, wodurch sich die Kosten für die Herstellung des Hebels 1 reduzieren lassen. Ein weiterer Vorteil besteht in den geringen Anforderungen an die Genauigkeit der gegenseitigen axialen Position der Lagerschale 32 einerseits und der hebelseitigen Wälzbahn 45 andererseits, was ebenfalls zu Montagevorteilen sowie zu günstigen Kosten bei der Herstellung führt.
Für eine in Umfangsrichtung untrennbare Anordnung von Lagerschale und Lagerkäfig, was während des Transports und bei der Montage des Schalenlagers von großem Vorteil ist, ist bei der Ausführungsform nach den Figuren 1 - 4 der Lagerkäfig 36 an seinem - nach der Montage - dem Schwenkarm 1A zugewandten Ende an jedem seiner Längsränder 73 mit einem Arretierelement 75 versehen. Das Arretierelement 75 setzt sich zusammen aus einem sich in Umfangsrichtung erstreckenden, schlanken und daher seitlich federnd nachgiebigen Abschnitt 76, an dessen Ende sich ein Verriegelungsvorsprung 77 befindet. An dem Verriegelungsvorspruch ist nach seitlich außen eine Sperrnase sowie eine Einführschräge ausgebildet, wodurch jedes Arretierelement 75 insgesamt die Gestalt einer Speerspitze aufweist.
An den Verriegelungsvorsprüngen 77 ist der Lagerkäfig 36 breiter, als auf seiner übrigen Länge. Wird der Lagerkäfig 36 in Umfangsrichtung in die Lagerschale 32 hineingeschoben, können die Verriegelungsvorsprünge 77 durch Kontakt der Einführschrägen elastisch nach innen ausweichen, und sodann an den Innenseiten der Seitenwände 71, 72 entlang gleiten. Hinter den Enden der Seitenwände 71, 72 können die Verriegelungsvorsprünge 77, wegen ihrer Anordnung an den nachgiebigen Abschnitten 76, zurückfedern. Sie springen nach seitlich außen vor, wobei die Sperrnasen, da ihre Gesamtbreite größer ist als der Innenabstand zwischen den beiden Seitenwänden 71, 72, hinter den Enden der Seitenwände 71, 72 arretieren.
Ein Zurückbewegen des Lagerkäfigs 36 ist dann nicht mehr möglich. Dieser ist mittels seiner beiden Arretierelemente 75 in der in Fig. 4 wiedergegebenen Montageposition verriegelt. Lagerschale 32 und Lagerkäfig 36 können sich nicht voneinander lösen und lassen sich daher als Einheit an dem Druckstück 7 montieren, ohne hierbei eine erhöhte Sorgfalt aufwenden zu müssen.
Der verbleibende Bewegungsfreiraum des Lagerkäfigs 36 wird von dem Anschlag 34 und den Anschlagkanten 78 an den Enden der Seitenwände 71, 72 begrenzt. Der Bewegungsfreiraum ist etwas größer bemessen als die maximale Wälzbewegung bei einer Bremsung. Somit sind die Arretierelemente 75 im Einbauzustand der Einheit aus Lagerkäfig 36 und Lagerschale 32 funktionslos.

Zwei an dem Lagerkäfig 36 ausgebildete Nasen 79 sind mit dem Breitenmaß des Anschlags 34 beabstandet, so dass bei der Montage der Lagerkäfig 36 über einen Reibschluss zwischen den Innenseiten der Nasen 79 und den Außenflächen des Anschlags 34 in einer Ausgangslage relativ zu der Lagerschale 32 vorpositionierbar ist. Dabei ist der Reibschluss so gering, dass dieser im Betrieb kein nachteiliges Hindernis darstellt, dagegen aber für die Fixierung bis zur Montage in die Scheibenbremse groß genug ist.

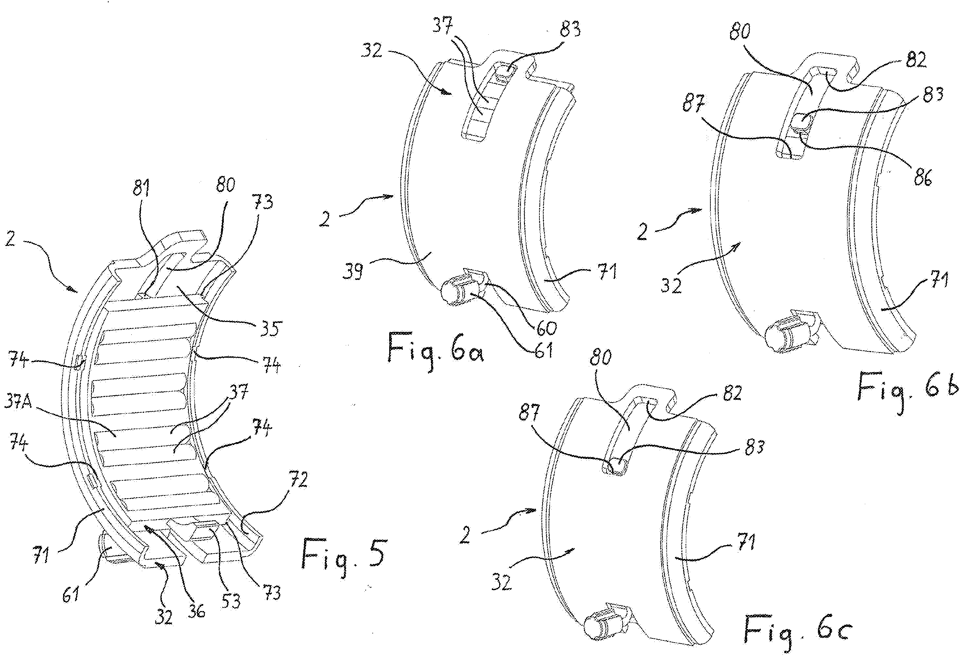

In den Figuren 5 und 6a - 6c ist eine zweite Ausführungsform des eine Baueinheit bildenden Schwenklagers 2 wiedergegeben, wobei für gleiche bzw. für gleichwirkende Teile dieselben Bezugszeichen verwendet werden, wie bei der Ausführungsform gemäß den Figuren 1 - 4.

Bei der zweiten Ausführungsform ist die Lagerschale 32 in der Wälzbahn 35 mit einem Langloch 80 versehen. Alternativ kann in der Wälzbahn 35 eine langlochförmige Ausnehmung ausgebildet sein, z. B. eine entsprechend gestaltete Vertiefung. In das Langloch 80 bzw. in die langlochförmige Ausnehmung hinein erstreckt sich ein Vorsprung 83, welcher an dem Ende des Lagerkäfigs 36 einstückig angeformt ist. Der Vorsprung 83 ist von solcher radialer Länge, dass er sich bis über die Wälzbahn 35 hinaus in das Langloch 80 hinein bzw. in eine dort angeordnete, langlochförmige Ausnehmung hinein erstreckt.

An dem Vorsprung 83 ist, dem Schwenkarm 1A des Hebels 1 zugewandt, ein Anschlag 81 ausgebildet. Mit diesem Anschlag 81 stößt der Vorsprung 83, bei einer Bewegung des Lagerkäfigs 36 in Richtung Schwenkarm 1A, gegen einen an der Lagerschale 32 ausgebildeten Anschlag 82. Als Anschlag 82 dient das dem Schwenkarm 1A nähere Ende des Langlochs 80.

Der Vorsprung 83 erstreckt sich radial nicht über die konvex gekrümmte Außenseite 39 der Lagerschale 32 hinaus, damit das Anliegen dieser Außenseite 39 an der Druckfläche 12 des Druckstücks 7 nicht beeinträchtigt ist.

Prinzipiell ist es möglich, dass sich an dem Vorsprung 83 noch ein weiterer Anschlag 86 (Fig. 6b) befindet, und dass dieser weitere Anschlag 86 die Beweglichkeit des Lagerkäfigs 36 in die andere Umfangsrichtung, also von dem Schwenkarm 1A weg, begrenzt. Diese Begrenzung tritt dann ein, wenn der weitere Anschlag 86 des Vorsprungs 83 gegen das entgegengesetzte Ende 87 des Langlochs 80 stößt, wie in Fig. 6c wiedergegeben.

Jedoch werden zur Begrenzung der Beweglichkeit des Lagerkäfigs 36 in diese andere Umfangsrichtung dieselben Maßnahmen wie bei dem Schwenklager nach der ersten Ausführungsform bevorzugt. In der hebelseitigen Wälzbahn 45 befindet sich daher die bereits beschriebene Tasche 50 mit der Anschlagkante 52. An dem Lagerkäfig 36 ist, der Anschlagkante 52 in Umfangsrichtung gegenüberliegend, der Vorsprung 53 ausgebildet (Fig. 5). Dieser erstreckt sich nach radial innen bis über jene teilzylindrische Ebene E hinaus (Fig. 3), in der sich die Wälzbahn 45 befindet, und reicht daher bis in die Tasche 50.

Sofern der Lagerkäfig 36 der zweiten Ausführungsform aus Kunststoff besteht, sind sowohl der nach radial außen gerichtete Vorsprung 83, als auch der nach radial innen gerichtete Vorsprung 53 einstückig an dem Lagerkäfig angeformt. Dazu setzt sich der Lagerkäfig 36 in Umfangsrichtung aus einem Hauptabschnitt, auf dem die Wälzkörper 37 angeordnet sind, und zu den Enden hin aus Endabschnitten zusammen. Der Vorsprung 83 und der Vorsprung 53 sind jeweils an einem dieser Endabschnitte angeformt, so dass die Wälzkörper 37 nicht beeinträchtigt werden.

Ähnlich wie der Vorsprung 53 ist auch der Vorsprung 83 und damit auch das Langloch 80 von relativ geringer Breite. Die Breite des Vorsprungs 83 beträgt maximal ein Drittel der Breite des Lagerkäfigs 36.

Von Vorteil ist, wenn sich die Breite des Langlochs 80 über dessen Länge etwas ändert, wobei die geringste Breite gleich oder etwas geringer ist, als die Breite des in das Langloch 80 ragenden Vorsprungs 83. Denn auf diese Weise lässt sich, z. B. in der in Fig. 6a wiedergegebenen Position, der Lagerkäfig 36 durch Klemmen bzw. durch einen Reibschluss relativ zu der Lagerschale 32 vorpositionieren. Das Klemmen bzw. der Reibschluss ist so gering, dass sich im Betrieb kein nachteiliges Hindernis ergibt, wohingegen der Vorteil für die Vorpositionierung der Bestandteile des Schwenklagers bis zu dessen Montage in der Scheibenbremse groß ist.

Das Langloch 80 führt zwar zu einer Verkleinerung der für die äußere Wälzbahn 35 verbleibenden Fläche. Jedoch ist zu bedenken, dass sich das Langloch 80 auf jenem Umfangsabschnitt der Wälzbahn 35 befindet, der am nächsten an dem Schwenkarm 1A liegt, vorzugsweise auf dem letzten Viertel der Wälzbahn 35. Denn in der in Fig. 6c wiedergegebenen Situation maximaler Zuspannkraft sind die in dem Lagerkäfig 36 zusammengefassten Wälzkörper 37 soweit auf der Wälzbahn 35 gewandert, dass sich kein Wälzkörper 37 mehr auf jenem Längsabschnitt der Wälzbahn 35 befindet, auf dem das Langloch 80 angeordnet ist. Bei maximalen Kräften steht daher für alle Wälzkörper 37 die volle Breite der Wälzbahn 35 zur Abstützung zur Verfügung. Zu Beginn der Zuspannung hingegen, wie in Fig. 6a dargestellt, rollen einige Wälzkörper 37 noch auf jenem Umfangsabschnitt der Wälzbahn 35 ab, auf dem sich das Langloch 80 befindet. Da sich das Langloch in der Mitte der Wälzbahnbreite befindet, stützen sich diese Wälzkörper 37 dann nur zu beiden Seiten des Langlochs 80 ab, und nicht in der Mitte. Wegen der in dieser Situation nur geringen Wälzlagerkräfte ist dies nicht von Nachteil.

Das Einsetzen des mit den Wälzkörpern 37 bestückten Lagerkäfigs 36 in die umgebende Lagerschale 32 lässt sich vereinfachen, indem an dem Vorsprung 83 und / oder an der Innenseite der Lagerschale 32 Einführschrägen oder Einführrampen ausgebildet sind, nach deren Überwinden der Lagerkäfig in der Lagerschale 32 arretiert, so dass dann keine Gefahr des Auseinanderfallens der Teile 36, 32 mehr besteht. Ein damit einhergehendes, kurzzeitiges Verbiegen des Lagerkäfigs und / oder der Lagerschale 32 wird dabei in Kauf genommen, ist aber nicht nachteilig.

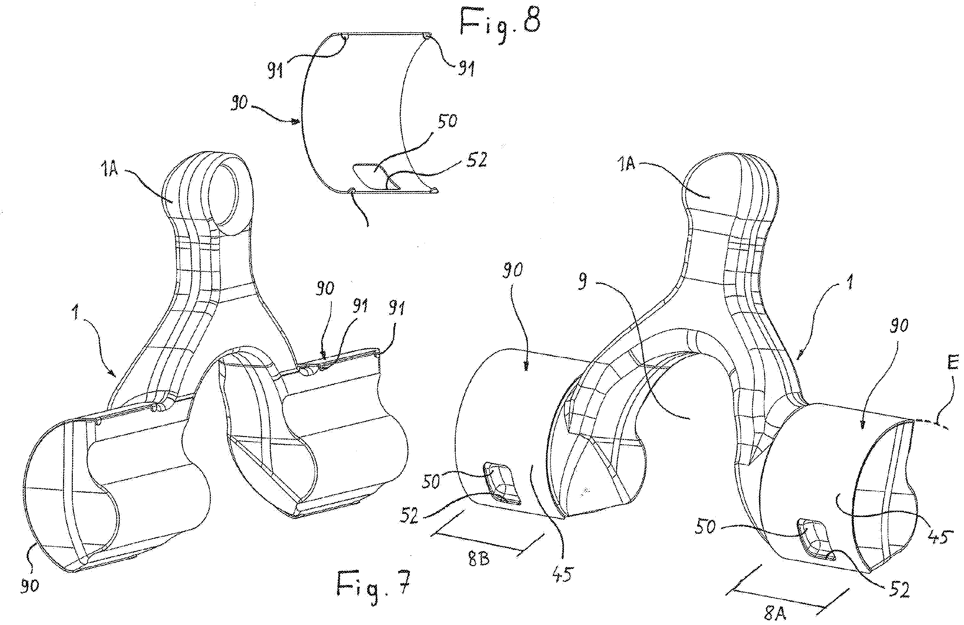

In den Figuren 7 und 8 ist eine andere Ausführungsform des Hebels 1 wiedergegeben. Ebenso wie bei den bereits beschriebenen Ausführungsformen ist der Hebel 1 einschließlich seines Schwenkarms 1A ein geschmiedetes Bauteil, wobei auch die im Hebel ausgebildete Tasche Ergebnis des Schmiedeprozesses ist. Bei dem Hebel nach Fig. 7 und Fig. 8 ist allerdings keine Schleifbearbeitung der zwei Wälzbahnen 45 erforderlich, da auf die betreffenden beiden Abschnitte 8A, 8B der Zuspannwelle Lagerschalen 90 aus Metallblech aufgeklipst sind.

Die Lagerschalen 90 haben die gleiche teilzylindrische Form, wie sie bei den bereits beschriebenen Ausführungsformen durch ein maschinelles Schleifen des Hebels 1 unter Erzielung der Druckflächen 11 bzw. Wälzbahnen 45 erreicht wird. Die teilzylindrische Außenseite jeder Lagerschale 90 bildet daher hier die Krümmungsebene E und die hebelseitige Wälzbahn 45.

Die Lagerschale 90 besteht aus verformtem und gestanztem Metallblech. Sie ist dort, wo sich dahinter die im Hebel 1 ausgebildete Tasche befindet, mit einer in der Wälzbahn 45 angeordneten oder in die Wälzbahn teilweise hinein reichenden Öffnung 50 versehen. Die Öffnung 50 erstreckt sich nur über einen Teil der Wälzbahnbreite und bildet im Übergang zu der außenseitigen Krümmungsebene E jene zweite Anschlagkante 52, welche die Beweglichkeit des Lagerkäfigs 36 in Umfangsrichtung begrenzt. Die unter der Öffnung 50 in dem Hebel 1 ausgebildete Tasche ist von mindestens gleicher Breite und Länge wie die Breite und Länge der Öffnung 50.

An den quer zur Umfangsrichtung angeordneten Rändern ist die Lagerschale 90 mit Abkantungen 91 versehen. Die Abkantungen sind hier in Gestalt von vier Befestigungslaschen 91, die den Hebel hintergreifen, so dass jede Lagerschale 90 unverdrehbar an dem Zuspannabschnitt 8A, 8B befestigt wird.

Die zwei Lagerschalen 90 sind identisch gestaltet. Sie können also nicht durch Vertauschen falsch montiert werden.

Jede der beiden Lagerschalen 90 ist aus einem flachen Blech hergestellt, und weist Abkantungen nur nach innen in Form der Befestigungslaschen 91 auf. Eventuell können zwecks Erhöhung der Stabilität der Lagerschale 90 dessen Seiten umgekantet sein, aber nur nach innen hin. Nach radial außen hingegen ist jede Lagerschale 90 ohne irgendwelche über die teilzylindrische Krümmungsebene E hinaus vorstehenden Elemente. Die dem Hebel 1 abgewandte Außenseite der Lagerschale 90 ist daher, abgesehen von ihrer Krümmung, gänzlich eben und ohne vorspringende oder vorstehende Teile.

Bei einer alternativen Ausführungsform ist zwar die Öffnung 50 in den Lagerschalen 90 vorhanden, jedoch befindet sich dahinter keine Tasche. Gleichwohl wird durch die Öffnung 50 dann der angestrebte zweite Begrenzungsanschlag erreicht, wenn das Blech, aus dem die Lagerschale 90 besteht, von solcher Materialdicke ist, dass der an dem Lagerkäfig 36 ausgebildete Vorsprung 53 nur in diese Öffnung 50 eintaucht und nicht in das Material des Hebels 1. In diesem Fall wird die Anschlagkante 52 durch den Übergang zwischen dem Rand der Öffnung 50 und der durch die Außenseite der Lagerschale 90 definierten Krümmungsebene E der Wälzbahn gebildet.

### Bezugszeichenliste

- 1: Hebel
- 1A: Schwenkarm
- 2: Wälzlager, Schwenklager
- 6: Innengewinde
- 7: Druckstück
- 8A: Abschnitt der Zuspannwelle
- 8B: Abschnitt der Zuspannwelle
- 9: Freiraum
- 11: Druckfläche
- 12: Druckfläche
- 32: Lagerschale
- 34: Vorsprung, Anschlag
- 35: Wälzbahn
- 36: Lagerkäfig
- 37: Wälzkörper
- 37A: Wälzkörper-Mantelfläche
- 39: Außenseite
- 45: Wälzbahn
- 50: Tasche oder Öffnung
- 52: Anschlagkante
- 53: Vorsprung
- 60: Verankerungszapfen
- 61: Dübel
- 62: Bohrung
- 71: Seitenwand
- 72: Seitenwand
- 73: Längsrand
- 74: Vorsprung
- 75: Arretierelement
- 76: nachgiebiger Abschnitt
- 77: Verriegelungsvorsprung
- 78: Anschlagkante
- 79: Nase
- 80: Langloch
- 81: Anschlag
- 82: Anschlag
- 83: Vorsprung
- 86: Anschlag
- 87: Ende Langloch
- 90: Lagerschale
- 91: Abkantung, Befestigungslasche

- E: Krümmungsebene
- F: Kraft
- M: Drehachse
- M1: Drehachse

## Patentansprüche

1. Lagerung eines mit einem Schwenkarm (1A) versehenen Hebels (1) gegenüber einem Druckstück (7), mit einer hebelseitigen, teilzylindrisch gekrümmten Wälzbahn (45), einer druckstückseitigen, teilzylindrisch gekrümmten Wälzbahn (35), an beiden Wälzbahnen (45, 35) abrollenden, in einem Lagerkäfig (36) zusammengefassten Wälzkörpern (37), und mit einem zu der einen Wälzbahn (35) drehfesten radialen Vorsprung (34), der einen die Beweglichkeit des Lagerkäfigs (36) in die eine Umfangsrichtung begrenzenden Anschlag bildet, **gekennzeichnet durch** eine in der anderen Wälzbahn (45) angeordnete oder in diese teilweise hinein reichende Tasche (50) oder Öffnung, die sich nur über einen Teil der Wälzbahnbreite erstreckt und im Übergang zu der Krümmungsebene (E) der Wälzbahn (45) eine Anschlagkante (52) bildet, welche die Beweglichkeit des Lagerkäfigs (36) in die andere Umfangsrichtung begrenzt.

2. Lagerung nach Anspruch 1, **dadurch gekennzeichnet, dass** die andere Wälzbahn (45) auf einem zu dem Schwenkarm (1A) entfernt liegenden Umfangsabschnitt mit der Tasche (50) bzw. Öffnung versehen ist.

3. Lagerung nach Anspruch 1 oder 2, **dadurch gekennzeichnet, dass** die Tasche (50) bzw. Öffnung auf der Mitte der Wälzbahnbreite angeordnet ist.

4. Lagerung nach einem der Ansprüche 1 - 3, **dadurch gekennzeichnet, dass** die Breite der Tasche (50) bzw. Öffnung nicht mehr als ein Drittel der Wälzbahnbreite beträgt.

5. Lagerung nach einem der vorangehenden Ansprüche, **dadurch gekennzeichnet, dass** der Lagerkäfig (36), der Anschlagkante (52) in Umfangsrichtung gegenüberliegend, mit einem in die Tasche (50) bzw. Öffnung ragenden Vorsprung (53) versehen ist.

6. Lagerung nach Anspruch 5, **dadurch gekennzeichnet, dass** der Vorsprung (53) an dem Lagerkäfig (36) einstückig angeformt ist.

7. Lagerung nach Anspruch 5 oder 6, **dadurch gekennzeichnet, dass** in Umfangsrichtung die Länge des Vorsprungs (53) geringer ist, als die Länge der Tasche (50) bzw. Öffnung.

8. Lagerung nach einem der Ansprüche 5 - 7, **dadurch gekennzeichnet, dass** die Breite des Vorsprungs (53) geringer ist, als die Breite der Tasche (50) bzw. Öffnung.

9. Lagerung nach einem der vorangehenden Ansprüche, **dadurch gekennzeichnet, dass** die eine Wälzbahn (35) druckstückseitig angeordnet und an einer Lagerschale (32) ausgebildet ist, an der der radiale Vorsprung (34) ausgebildet ist.

10. Lagerung nach Anspruch 9, **dadurch gekennzeichnet, dass** die Lagerschale (32) zu ihrer Befestigung an dem Druckstück (7) einen nach außen ragenden Verankerungsstift (60) aufweist, der in dem Druckstück (7) verdübelt ist.

11. Lagerung nach einem der vorangehenden Ansprüche, **dadurch gekennzeichnet, dass** sich die Tasche (50) bzw. Öffnung in der hebelseitigen Wälzbahn (45) befindet.

12. Lagerung nach einem der vorangehenden Ansprüche, **dadurch gekennzeichnet, dass** der Hebel (1) einschließlich des Schwenkarms (1A) ein geschmiedetes Bauteil ist, und dass die Tasche (50) Ergebnis des Schmiedeprozesses ist.

## Claims

1. Bearing for a lever (1), which is provided with a pivot arm (1A), relative to a pressure piece (7), with a partially cylindrically curved rolling guide (45) on the lever side, a partially cylindrically curved rolling guide (35) on the pressure piece side, rolling elements (37) which roll on both rolling guides (45, 35) and are assembled in a bearing cage (36), and having a radial projection (34), which is non-rotatably fixed relative to one rolling guide (35) and forms a stop which limits the movability of the bearing cage (36) in one circumferential direction, **characterised by** a pocket (50) or opening, which is arranged in the other rolling guide (45) or extends partially into this rolling guide, the pocket or opening extending only over a part of the width of the rolling guide and, at the transition to the curvature plane (E) of the rolling guide (45), forming a stop edge (52) which limits the movability of the bearing cage (36) in the other circumferential direction.

2. Bearing according to claim 1, **characterised in that** the other rolling guide (45) is provided with the pocket (50) or opening on a section of the circumference remote from the pivot arm (1A).

3. Bearing according to claim 1 or 2, **characterised in that** the pocket (50) or opening is arranged at the centre of the width of the rolling guide.

4. Bearing according to one of claims 1 to 3, **characterised in that** the width of the pocket (50) or opening is no more than one third of the width of the rolling guide.

5. Bearing according to one of the preceding claims, **characterised in that**, opposite the stop edge (52) in the circumferential direction, the bearing cage (36) is provided with a projection (53) which projects into the pocket (50) or opening.

6. Bearing according to claim 5, **characterised in that** the projection (53) is formed integrally on the bearing cage (36).

7. Bearing according to claim 5 or 6, **characterised in that** the length of the projection (53) in the circumferential direction is less than the length of the pocket (50) or opening.

8. Bearing according to one of claims 5 to 7, **characterised in that** the width of the projection (53) is less than the width of the pocket (50) or opening.

9. Bearing according to one of the preceding claims, **characterised in that** one rolling guide (35) is arranged on the pressure piece side and is formed on a bearing shell (32) on which the radial projection (34) is formed.

10. Bearing according to claim 9, **characterised in that** the bearing shell (32) has, for fastening it to the pressure piece (7), an outwardly projecting anchoring pin (60) which is anchored in the pressure piece (7).

11. Bearing according to one of the preceding claims, **characterised in that** the pocket (50) or opening is located in the rolling guide (45) on the lever side.

12. Bearing according to one of the preceding claims, **characterised in that** the lever (1), including the pivot arm (1A), is a forged component, and **in that** the pocket (50) is a result of the forging process.

## Revendications

1. Palier d'un levier (1) muni d'un bras pivotant (1A) par rapport à une pièce de pression (7), avec une piste de roulement (45) incurvée de manière partiellement cylindrique, côté levier, une piste de roulement (35) incurvée de manière partiellement cylindrique côté pièce de pression, des corps de roulement (37), roulant sur les deux pistes de roulement (45, 35) et regroupés dans une cage de palier (36), et avec une saillie radiale (34) immobilisée en rotation par rapport à une piste de roulement (35), qui forme une butée limitant la mobilité de la cage de palier (36) dans une direction circonférentielle, **caractérisé par** un gousset (50) ou ouverture disposée dans l'autre piste de roulement (45) ou dépassant partiellement dans celle-ci, qui s'étend seulement sur une partie de la largeur de la piste de roulement et forme, dans la transition avec le plan de courbure (E) de la piste de roulement (45), une arête de butée (52) qui limite la mobilité de la cage de palier (36) dans l'autre direction circonférentielle.

2. Palier selon la revendication 1, **caractérisé en ce que** l'autre piste de roulement (45) est muni du gousset (50) ou de l'ouverture sur une portion de circonférence éloignée du bras pivotant (1A).

3. Palier selon la revendication 1 ou 2, **caractérisé en ce que** le gousset (50) ou l'ouverture est disposée au centre de la largeur de la piste de roulement.

4. Palier selon l'une des revendications 1 à 3, **caractérisé en ce que** la largeur du gousset (50) ou de l'ouverture ne représente pas plus d'un tiers de la largeur de la piste de roulement.

5. Palier selon l'une des revendications précédentes, **caractérisé en ce que** la cage de palier (36), située en face de l'arête de butée (52) dans la direction circonférentielle, est munie d'une saillie (53) dépassant dans le gousset (50) ou l'ouverture.

6. Palier selon la revendication 5, **caractérisé en ce que** la saillie (53) est formée d'une seule pièce sur la cage de palier (36).

7. Palier selon la revendication 5 ou 6, **caractérisé en ce que**, dans la direction circonférentielle, la longueur de la saillie (53) est inférieure à la longueur du gousset (50) ou de l'ouverture.

8. Palier selon l'une des revendications 5 à 7, **caractérisé en ce que** la largeur de la saillie (53) est inférieure à la largeur du gousset (50) ou de l'ouverture.

9. Palier selon l'une des revendications précédentes, **caractérisé en ce qu'**une piste de roulement (35) est disposée du côté de la pièce de pression et est réalisée sur une coque de palier (32) sur laquelle est réalisée la saillie (34).

10. Palier selon la revendication 9, **caractérisé en ce que** la coque de palier (32) comprend, pour sa fixation sur la pièce de pression (7), une goupille d'ancrage (60) dépassant vers l'extérieur, qui est chevillée dans la pièce de pression (7).

11. Palier selon l'une des revendications précédentes, **caractérisé en ce que** le gousset (50) ou l'ouverture se trouve dans la piste de roulement (45) côté levier.

12. Palier selon l'une des revendications précédentes, **caractérisé en ce que** le levier (1), y compris le bras pivotant (1A), est une pièce forgée et **en ce que** le gousset (50) est le résultat du processus de forgeage.
